Europäisches Patentamt

European Patent Office

Office européen des brevets

(11) Veröffentlichungsnummer: **0 232 800**
**A2**

(12) # EUROPÄISCHE PATENTANMELDUNG

(21) Anmeldenummer: **87101162.3**

(22) Anmeldetag: **28.01.87**

(51) Int. Cl.⁴: **B 62 J 1/16**

(30) Priorität: **11.02.86 DE 8603549 U**

(43) Veröffentlichungstag der Anmeldung: **19.08.87**
**Patentblatt 87/34**

(84) Benannte Vertragsstaaten: **AT BE CH DE ES FR GB IT LI NL SE**

(71) Anmelder: **Heinz Kettler GmbH & Co., Neheimer Strasse 22, D-4763 Ense-Parsit (DE)**

(72) Erfinder: **Kettler, Heinz, Neheimer Strasse, D-4763 Ense-Parsit (DE)**

(74) Vertreter: **Richter, Bernhard, Dipl.-Ing., Beethovenstrasse 10, D-8500 Nürnberg 20 (DE)**

(54) **Kindersitz für ein Fahrrad.**

(57)   Die Erfindung betrifft einen Kindersitz für die Anbringung auf dem Gepäckträger eines Fahrrades. Der Kindersitz hat eine von der Sitzfläche (10) aufragende Rückenlehne (11) und zwei zu beiden Seiten der Sitzfläche aufragende Seitenwände (12). Zur Erhöhung der Sicherheit und Anpassung an unterschiedliche Körpergrössen von Kindern ist oberhalb der Rückenlehne (11) eine höhenverstellbare Kopfstütze (13) angeordnet.

EP 0 232 800 A2

DIPL.-ING. **BERNHARD RICHTER**

PATENTANWALT

zugel. Vertreter beim Europ. Patentamt
European Patent Attorney

**0232800**

8500 NÜRNBERG 20, den
Beethovenstraße 10
Telefon Sa.-Nr. (09 11) 59 50 15
Telegramm: Patri
Telex: 06 23 268 patri d

27.01.1987
R/sa

Firma Heinz KETTLER GmbH + Co,
D-4763 Ense-Parsit

"Kindersitz für ein Fahrrad"

Die Erfindung betrifft einen Kindersitz für die Anbringung auf dem Gepäckträger eines Fahrrades, mit einer von der Sitzfläche aufragenden Rückenlehne und zwei zu beiden Seiten der Sitzfläche aufragenden Seitenwänden.

Die bundesdeutsche Straßenverkehrsordnung erlaubt das Mitnehmen von Kindern bis zum Alter von sieben Jahren auf Fahrrädern, wenn dort geeignete Sitze angebracht sind. Da sich die Körpergröße eines Kindes bis zu diesem Alter sehr wesentlich verändert, und auch von Kind zu Kind verschieden ist, ist ein Kindersitz mit einer ganz bestimmten Form und Anordnung am Fahrrad in vielen Fällen ungeeignet. Je nach der Körpergröße des Kindes kann die Oberkante der Rückenlehne des Kindersitzes an unterschiedlichen Rückenstellen des Kindes liegen, beispielsweise auch in Nackenhöhe, so daß bei plötzlichem starken Bremsen oder beim Aufprall des Fahrrades Verletzungen im Nackenbereich des Kindes erfolgen können.

Der Erfindung liegt die Aufgabe zugrunde, bei einem Kindersitz die Sicherheit zu erhöhen. Der Kindersitz soll in einfacher Weise an unterschiedliche Körpergrössen von Kindern angepaßt werden können, wobei in jedem Fall der Kopf eines in dem Sitz sich befindenden Kindes sowohl hinten, als auch an beiden Seiten am Kindersitz abstützbar sein soll. Außerdem soll der Kindersitz eine Sicherung gegen Abschubkräfte vom Gepäckträger des Fahrrades erhalten, die ebenfalls an die unterschiedlichen Körpergrößen anpaßbar ist. Diese Sicherung soll ein Abgleiten des Sitzes bei unbeabsichtigtem Lockern seiner Befestigung am Gepäckträger oder bei etwaigen Gepäckträgerbrüchen verhindern.

Diese Aufgabe wird erfindungsgemäß dadurch gelöst, daß oberhalb der Rückenlehne eine höhenverstellbare Kopfstütze angeordnet ist. Bei kleinen Kindern kann die Kopfstütze in ihrer untersten Stellung in unmittelbarer Verlängerung der Rückenlehne verbleiben, während bei größeren Kindern die Kopfstütze nach oben verstellt werden kann.

Bevorzugt schließt sich an jeder Seite der Kopfstütze eine in Fahrtrichtung weisende Ohrenstützwand an. Auf diese Weise ist für jedes Kind der Kopf sowohl nach hinten als auch nach den beiden Seiten von der Kopfstütze abgedeckt.

Unterhalb der Sitzfläche ist bevorzugt eine verstellbare Haltevorrichtung für die Befestigung am Fahrradrahmen angeordnet, die eine kreisbogenförmige Schelle, eine mit mehreren hintereinander angeordneten Einhängeschlitzen versehene Zugleiste und einen am Kindersitz gelagerten, in Fahrtrichtung sich erstreckenden Laschenhaken aufweist. Diese Haltevorrichtung wirkt als Sicherung gegen auf den Sitz einwirkende Abschubkräfte. Sie verhindert das Abgleiten des Sitzes vom Gepäckträger und läßt sich auf unterschiedliche Kindergrößen einstellen.

Bevorzugte Ausführungsformen der Erfindung sind in den weiteren Unteransprüchen enthalten. Der Schutzumfang erstreckt sich nicht nur auf die beanspruchten Einzelmerkmale, sondern auch auf deren Kombination.

Ein Ausführungsbeispiel der Erfindung ist in der Zeichnung dargestellt und wird im folgenden näher beschrieben. Es zeigen:

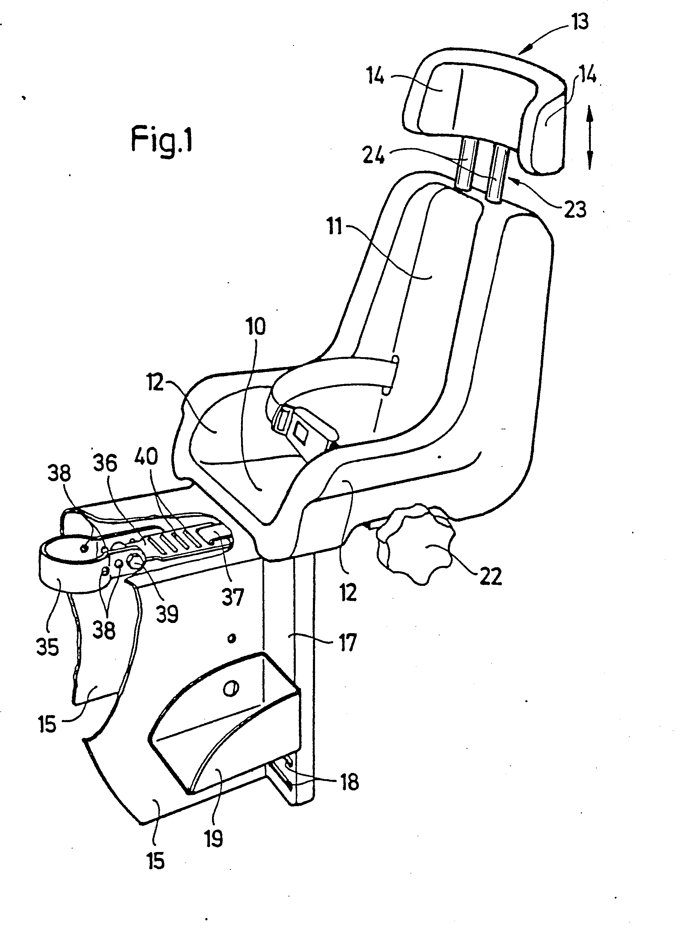

Fig. 1:  eine perspektivische Ansicht des erfindungsgemäßen Kindersitzes mit einer einstellbaren Sicherheitshaltevorrichtung für die Befestigung am Fahrrad,

Fig. 2:  eine Rückansicht des Kindersitzes mit der verstellbaren Kopfstütze,

Fig. 3:  einen waagerechten Schnitt durch die Rückenlehne des Kindersitzes im Bereich der Verstellvorrichtung für die Kopfstützenhöhe gemäß der Linie III-III der Fig. 2,

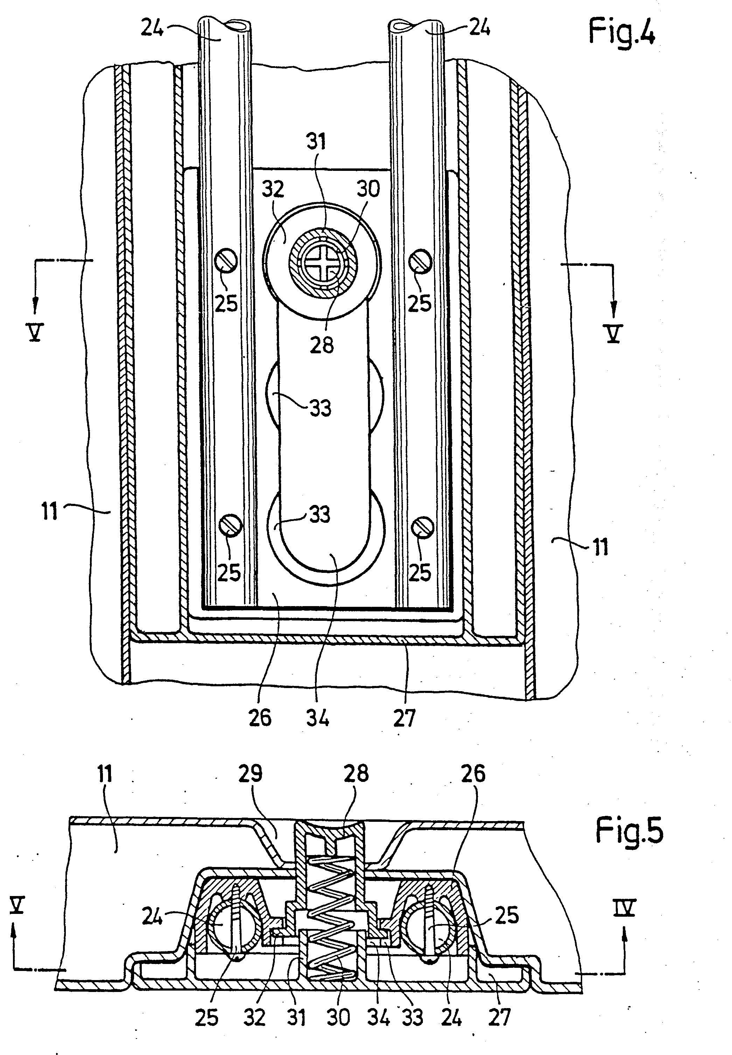

Fig. 4:   einen senkrechten Schnitt durch
die Rückenlehne mit der Höhenverstellvorrichtung gemäß Linie
IV-IV der Fig. 5,

Fig. 5:   einen waagerechten Schnitt durch
die Rückenlehne mit der Höhenverstellvorrichtung gemäß Linie
V-V der Fig. 4.

Der Kindersitz besteht aus einem aus PVC-Material geblasenen doppelwandigen Körper mit einer Sitzfläche 10,
einer Rückenlehne 11 und zwei Seitenwänden 12, die von
der Rückenlehne 11 aus in voller Länge der Sitzfläche
10 bis zum Armstützenbereich aufragen, während sie von
dort aus nach oben sich nur noch geringfügig nach vorn
erstrecken. An der Oberkante der Rückenlehne 11 schließt
sich eine Kopfstütze 13 an, die zwei seitliche, sich in
Fahrtrichtung erstreckende Ohrenstützwände 14 aufweist.

Unterhalb der Sitzfläche 10 sind an dem Kindersitz
zwei parallele, in Fahrtrichtung sich erstreckende
Schutzwände 15 angeordnet, die einen Tunnel bilden, in
welchem sich unterhalb eines Gepäckträgers 16 das Hinterrad des Fahrrades bewegen kann. An der Außenseite jeder
Schutzwand 15 befindet sich eine senkrechte Schutzwandstrebe 17 mit mehreren übereinander angeordneten waagerechten Einhängeschlitzen 18 für die höhenverstellbare
Einhängung einer Fußstütze 19.

Der Kindersitz läßt sich auf den Gepäckträger 16 aufsetzen und dort mit Hilfe zweier Klemmbacken 20, die mittels einer quer zur Fahrtrichtung verlaufenden, unter dem Kindersitz gelagerten Spindel 21 mit einem Drehknopf 22 verstellbar sind, festklemmen. Die Spindel 21 ist mit einem Rechtsgewinde für die eine Klemmbacke 20 und mit einem Linksgewinde für die andere Klemmbacke 20 versehen, so daß bei ihrer Drehung in der einen Richtung die Klemmbacken 20 von den Seiten her auf den Gepäckträger zubewegt und bei der Drehung in der anderen Richtung die Klemmbacken 20 nach außen von dem Gepäckträger 16 fortbewegt werden. Der Drehknopf 22 ist nach dem Festklemmen des Kindersitzes am Gepäckträger 16 verriegelbar.

Die Kopfstütze 13 ist mit Hilfe eines U-Bügels 23 an der Rückenlehne 11 des Kindersitzes höhenverstellbar gehalten. Im Stegbereich des U-Bügels 23 ist die Kopfstütze 13 daran befestigt. Die beiden U-Schenkel 24 verlaufen von der Kopfstütze 13 aus parallel nach unten und erstrecken sich innerhalb der Rückenlehne, wo sie mit Hilfe von Schrauben 25 an einem gemeinsamen höhenverschiebbaren Gleitstück 26 befestigt sind. Dieses ist in einem Hohlraum der Rückenlehne 11 höhenverschiebbar gelagert, der mittels einer an der Vorderseite der Rückenlehne 11 angeordneten Abdeckkappe 27 verschlossen ist.

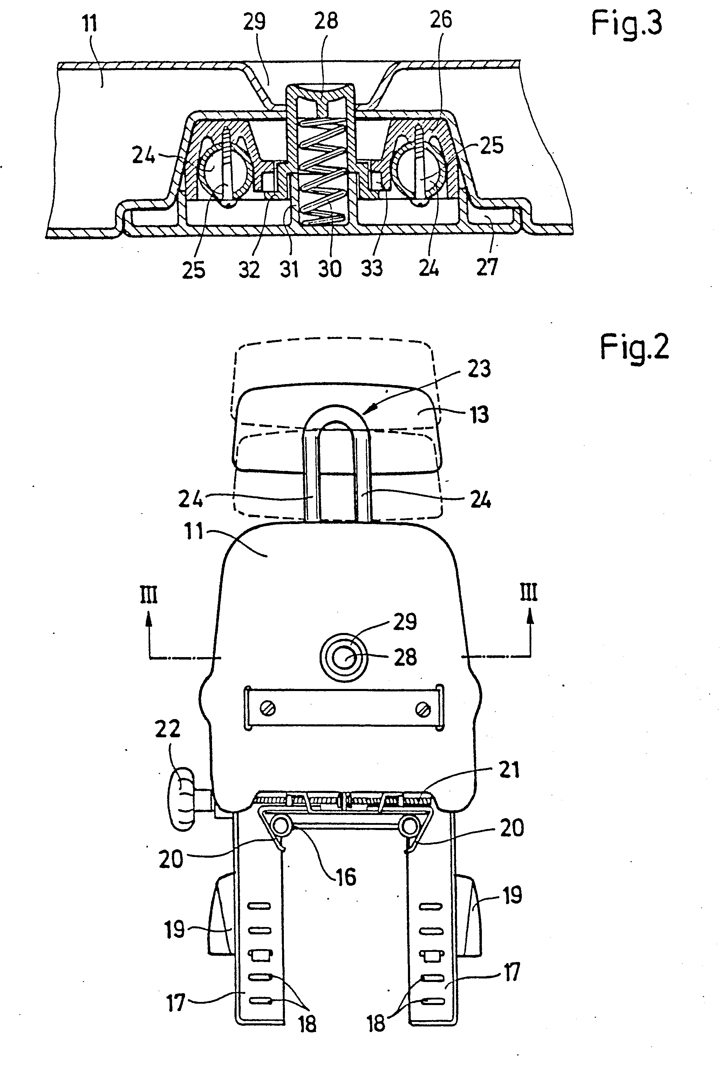

In Höhenrichtung wird das Gleitstück 26 innerhalb der Rückenlehne 11 mit Hilfe eines zylindrischen Druckknopfes 28 gehalten. Dieser ist mit seinem Betätigungsende innerhalb einer von der Rückseite der Rückenlehne 11 ausgehenden Einschnürung 29 mit waagerechter, in Fahrtrichtung weisender Achse angeordnet. Der Druckknopf 28 ist hohl ausgeführt und enthält eine zylindrische Schraubendruckfeder 30, die sich mit einem Ende an dem Druckknopf 28 und mit dem anderen Ende an der Abdeckkappe 27 abstützt. Dieses andere Ende ist von einer an der Abdeckkappe 27 ausgebildeten Führungshülse 31 umgeben. Das der Abdeckkappe 27 zugewandte Ende des Druckknopfes 28 weist einen Flansch 32 auf, welcher sich in einer dazu passenden Ausnehmung 33 des Gleitstückes 26 befindet. Am Gleitstück 26 sind drei gleiche Ausnehmungen 33 in gleichmäßigen Abständen übereinander angeordnet, so daß daß Gleitstück 26 drei unterschiedliche Höhen einnehmen kann, in welchen jeweils der Flansch 32 sich in einer Ausnehmung 33 befindet. Entsprechend der Höhe des Gleitstücks 26 in der Rückenlehne 11 ergibt sich die Höhe der Kopfstütze 13 oberhalb der Rückenlehne 11. In Fig. 2 der Zeichnung ist die Kopfstütze 13 in ihrer mittleren Stellung dargestellt. Die niedrigere Stellung und die höhere Stellung sind jeweils gestrichelt angedeutet.

Um unterschiedliche Höhen bei gedrücktem Druckknopf 28 einstellen zu können, weist das Gleitstück 26 ein senkrechtes Langloch 34 auf, in welchem sich der Druckknopf 28 erstreckt. Die Ausnehmungen 33 befinden sich im Bereich dieses Langlochs 34 und haben einen größeren Durchmesser als die dem Druckknopf 28 hier entsprechende Langlochbreite.

Um die Kopfstütze 13 am Kindersitz zu verstellen, wird an der Rückseite der Rückenlehne 11 der Druckknopf 28 in Fahrtrichtung entgegen der Wirkung der Druckfeder 30 gedrückt. Dabei gelangen der Flansch 32 des Druckknopfes 28 und die Ausnehmung 33 des Gleitstücks 26 außer Eingriff, so daß nun das Gleitstück 26 in der gewünschten Richtung nach oben oder nach unten verschoben werden kann, bis die nächste Ausnehmung 33 mit dem Flansch 32 zur Deckung kommt und der Flansch dort einrastet. Zur Führung des Druckknopfes 28 dient nicht nur eine passende Bohrung im Bereich der Einschnürung 29 an der Rückwand der Rückenlehne 11, sondern auch die Führungshülse 31 der Abdeckkappe 27 im Bereich der Vorderseite der Rückenlehne 11. Die Führungshülse 31 bildet mit ihrer freien ringförmigen Stirnfläche einen Anschlag für den Druckknopf 28, wenn das Gleitstück 26 gelöst ist.

Der Kindersitz ist außer seiner Befestigung mit Hilfe der Klemmbacken 20 an dem Gepäckträger 16 zusätzlich durch eine besondere Haltevorrichtung am Fahrrad gesichert. Diese Vorrichtung weist eine kreisbogenförmige Schelle 35, eine in Fahrtrichtung sich erstreckende Zugleiste 36 und einen unterhalb der Sitzfläche 10 am Kindersitz gelagerten, in Fahrtrichtung weisenden Laschenhaken 37 auf. Zur Festlegung der Schelle 35 am Fahrrad sind mehrere Paare von quer zur Fahrtrichtung verlaufenden fluchtenden Bohrungen 38 an der Schelle 35 vorgesehen. Mit Hilfe einer durch ein Paar dieser Bohrungen und durch eine am vorderen Ende der Zugleiste 36 ausgebildete Öse hindurchgesteckten Schraube 39 ist die Schelle 35 am Fahrrad und an der Zugleiste 36 befestigt. Die Schelle 35 ist flexibel und läßt sich mit Hilfe der mehreren Paare von Bohrungen 38 an verschiedene Fahrradtypen anpassen. Die Zugleiste 36 und die Schelle 35 können ständig am Fahrrad verbleiben.

Die Zugleiste 36 weist mehrere gleiche quer zur
Fahrtrichtung verlaufende und in Fahrtrichtung in
Abständen hintereinander angeordnete Einhängeschlitze 40 auf, so daß der Laschenhaken 37 in einen
dieser Einhängeschlitze 40 entsprechend dem gewünschten Abstand des Kindersitzes von der Schelle
35 eingehängt werden kann. Diese Halterung dient
zur Aufnahme von Abschubkräften und verhindert ein
Abgleiten des Sitzes bei unbeabsichtigtem Lockern
der Klemmbacken 20 oder bei etwaigen Brüchen am
Gepäckträger 16.


- Ansprüche -

DIPL.-ING. **BERNHARD RICHTER**

PATENTANWALT

zugel. Vertreter beim Europ. Patentamt

European Patent Attorney

0232800

8500 NÜRNBERG 20, den
Beethovenstraße 10
Telefon Sa.-Nr. (09 11) 59 50 15
Telegramm: Patri
Telex: 06 23 268 patri d

27.01.1987
R/sa

Firma Heinz KETTLER GmbH + Co

4763 Ense-Parsit, Neheimer Straße 22

Patentansprüche:

1. Kindersitz für die Anbringung auf dem Gepäckträger eines Fahrrades, mit einer von der Sitzfläche aufragenden Rückenlehne und zwei zu beiden Seiten der Sitzfläche aufragenden Seitenwänden, dadurch gekennzeichnet, daß oberhalb der Rückenlehne (11) eine höhenverstellbare Kopfstütze (13) angeordnet ist.

2. Kindersitz nach Anspruch 1, dadurch gekennzeichnet, daß sich an jeder Seite der Kopfstütze (13) eine in Fahrtrichtung weisende Ohrenstützwand (14) anschließt.

3. Kindersitz nach Anspruch 1 oder 2, dadurch gekennzeichnet, daß die Kopfstütze (13) im Stegbereich eines U-Bügels (23) befestigt ist, dessen U-Schenkel (24) innerhalb der Rückenlehne (11) enden.

4. Kindersitz nach einem der Ansprüche 1 bis 3, dadurch gekennzeichnet, daß die beiden U-Schenkel (24) an einem innerhalb der Rückenlehne (11) höhenverschiebbar gelagerten Gleitstück (26) befestigt sind, welches mittels eines von einer Druckfeder (30) beaufschlagten zylindrischen Druckknopfes (28) innerhalb der Rückenlehne (11) stufenweise verstellbar gehalten ist.

5. Kindersitz nach einem der Ansprüche 1 bis 4, dadurch gekennzeichnet, daß der Druckknopf (28) bei Betätigung in Achsrichtung waagerecht verschiebbar ist und sich mit seinem Betätigungsende in einer an der Rückseite des Kindersitzes ausgebildeten, nach außen offenen Einschnürung (29) der Rückenlehne (11) befindet, während sein anderes Ende mit einem Flansch (32) versehen ist und sich mit diesem innerhalb einer von mehreren übereinander angeordneten Ausnehmungen (33) des Gleitstücks (26) in der Einraststellung abstützt.

6. Kindersitz nach einem der Ansprüche 1 bis 5, dadurch gekennzeichnet, daß die innerhalb des zylindrischen Druckknopfes (28) angeordnete Druckfeder (30) sich mit einem Ende an einer Abdeckkappe (27) abstützt, mit welcher ein das Gleitstück (26) aufnehmender Hohlraum der Rückenlehne (11) an deren Vorderseite verschlossen ist.

7. Kindersitz nach einem der Ansprüche 1 bis 6, dadurch gekennzeichnet, daß an der Abdeckkappe (27) eine das Ende der Druckfeder (30) umgebende Führungshülse (31) ausgebildet ist.

8. Kindersitz nach Anspruch 1, dadurch gekennzeichnet, daß unterhalb der Sitzfläche (10) eine verstellbare Haltevorrichtung für die Befestigung am Fahrradrahmen angeordnet ist, die eine kreisbogenförmige Schelle (35), eine mit mehreren hintereinander angeordneten Einhängeschlitzen (40) versehene Zugleiste (36) und einen am Kindersitz gelagerten, in Fahrtrichtung sich erstreckenden Laschenhaken (37) aufweist.

9. Kindersitz nach Anspruch 8, dadurch gekennzeichnet, daß die Zugleiste (36) sich in Fahrtrichtung erstreckt und an ihrem vorderen Ende mit der Schelle (35) verschraubt ist.

10. Kindersitz nach Anspruch 8 oder 9, dadurch gekennzeichnet, daß die Schelle (35) mehrere in Fahrtrichtung hintereinander angeordnete Paare von quer zur Fahrtrichtung verlaufenden fluchtenden Bohrungen (38) aufweist, wobei eine am vorderen Ende der Zugleiste (36) angeordnete Schraube (39) jeweils in den beiden Bohrungen (38) eines Paares eingesteckt ist.

Fig.1

0232800

Fig.3

Fig.2

0232800

Fig.4

Fig.5